# EUROPEAN PATENT APPLICATION

(11) **EP 1 873 206 A1**
(43) Date of publication of application: **02.01.2008**
(21) Application number: 06013108.3
(22) Date of filing: 26.06.2006
(51) Int. Cl.: C08L 63/00

(54) **Nano-composite dielectrics**

(71) Applicant: ETH Zürich, 8092 Zürich (CH)
(72) Inventor: Weiers, Tilman, 8003 Zürich (CH); Putzi, Markus, 8405 Winterthur (CH)
(74) Representative: Blum, Rudolf Emil

(57) **Abstract**

The present invention relates to compositions having beneficial dielectrical properties ("nano-composite dielectrics"), their manufacturing, their use and devices comprising such compositions.

## Description

The present invention relates to compositions having beneficial dielectrical properties ("nano-composite dielectrics"), their manufacturing, their use and devices comprising such compositions. Further, the invention relates to compositions and methods of reducing the electrical tree propagation in impregnating resins. by the dispersion of semiconductive nano-particles.

The vacuum pressure impregnation process is the prevalent process used for the manufacture of contemporary winding insulations of rotating high voltage machines. This means that winding insulations which consists of mica tapes are impregnated with an impregnant. Therefore, the impregnating resin must fulfill the following requirements: i) During the vacuum pressure impregnation process, it must fill the voids in the insulation. ii) The resin in combination with the mica tapes serves as an electrical insulator at electric field strengths around 3 kV/mm rms (in the straight part of the insulation). The vacuum pressure impregnation is a multistep process. In a first step, the air is removed out of the insulation, which has not been impregnated yet. For this purpose, a vacuum of less than 1 mbar is applied. After the removal of the air the insulation is impregnated in a second step. For this purpose a pressure of approximately 4 bars is applied. In a next step, the impregnation resin is cured.

Electrical treeing is referred to as the most relevant electrical ageing mechanism in winding insulations. The term electrical treeing stems from the tree-like propagation of channels inside an insulator. Electrical ageing experiments indicate that the propagation of tree channels occurs almost exclusively in the (impregnating) resin.

The size of the mica particles, the (impregnating) resins and the tape application are decisive parameters in the manufacture of micaceous winding insulations.

The potential insulation life or the maximum electric field strength of an insulation increase as the mica particle size decreases. However, the resin impregnability worsens as the mica particle size decreases. This limits the decrease of the size of the employed mica particles. As the impregnating resins changed from polyester and unsaturated polyester imide resins to epoxy resins, the electric field strengths inside micaceous winding insulations increased from approximately 2 kV/mm to values near and above 3kV/mm rms. A sufficiently low viscosity is the limiting factor in the use of epoxy resins as impregnating resins for winding insulations. Preferably, at the point of impregnation the value of the viscosity is less than 300mPas. The currently used processes use low viscosity epoxy resins combined to polycarbon anhydrides. The polycarbon anhydride serves both as the diluent and as the hardener. The epoxy component consists of bisphenol -A and -F formulations and of cycloaliphatics. A glycidyl ether derivative may be added in order to lower the viscosity. Furthermore, formulations of the compounds mentioned above with polyester and unsaturated polyester imide resins are employed for cost pressure.

The utilization of micro size fillers in impregnating resins is common for various practical applications. During the last ten years nano-dielectrics emerged. In the insulations, the size of the dispersed particles is below 100nm [1].

The mica tape application significantly influences potential insulation life. The time to breakdown of insulation can vary by orders of magnitude in dependence on the layered structure of the mica tapes and the overlap of these tapes. However, the resin impregnability, which depends on the layered structure of the insulation, and the costs for hand or machine tape application provide limitations for the optimization of the layered insulation structure.

Prior to the development of a procedure for the dispersion of nano-particles in an impregnating resin as disclosed in this specification, it was unknown whether a homogeneous distribution of the nano-particles in epoxy resin can be achieved. The main difficulty is due to the low viscosity of these resins. The viscosity continues to decrease when the resin is heated to its cure temperature. For this reason, it was assumed that the particles would settle after the mixing or during the cure of the resin.

Ding et al (2004 Annual Report Conference on Electrical Insulation and Dielectric Phenomena, 332 ff) describes epoxy resins consisting of ZnO nano-particles having beneficial dielectric properties. The proposed epoxy resins have, however, a high viscosity making them unsuitable for a number of applications. Further, the difficulty in preparing nano-composite dielectrics based on commonly used polymers is acknowledged.

Imai et al (Proceedings of 2005 Int. Symposium on Electrical Insulating Materials, June 5-9, 2005, Kitakyushu, Japan, 239 ff) describes epoxy resins containing 5wt-% of nano-scale silica particles. The disclosed materials show improved properties with regards to partial discharge resistance and breakdown strength. This document also discloses the improvements obtained by using coupling agents of the silane type. However, the document also notes the difficulty to dispense the nano-scale particles without aggregations, although epoxy resin and nano-scale silica particles are mixed with shear force in the preparation.

Nelson et al (J.Phys.D: Appl Phys. 38, (2005) 213 ff) describes TiO₂ nano-particles incorporated in thermosetting resins ("TiO₂ epoxy composite system") having advantageous dielectric properties. It is acknowledged by the author that nano-particles influence the cross-linking of the polymers, resulting in a polymer with lower cross-link density. It is suggested that this is caused by the surface -OH groups of the nano-particles used.

In summary, the above discussed prior art discloses various polymer-based dielectrics comprising nano-particles. The compositions disclosed belong to the group of "casting resins", i.e. compositions having a high viscosity. Due to their high viscosity such resins have a limited use in manufacturing electrical devices. None of the prior art documents discloses "impregnating resins", i.e. resins having a low viscosity and thus allowing the manufacturing of electrical devices by means of impregnation. Further, resins disclosed in the prior art show little thermal stability, again leading to limitations in the use of electrical devices.

It is an aim of the present invention, to provide alternative compositions having beneficial dielectric properties, in particular having an improved dielectric strength.

It is a further aim of the present invention, to provide alternative compositions retarding electrical tree propagation.

It is a further aim of the present invention to provide compositions having similar beneficial dielectric properties without showing the disadvantages of the already known compositions.

It is a further aim of the present invention to provide a reliable process of manufacturing such compositions.

It is a further aim of the present invention to provide a composition having beneficial dielectric properties and having a low viscosity.

It is a further aim of the present invention to provide a composition useful as the impregnant of winding insulations, in particular for high voltage rotating machines.

It is a further aim of the present invention to provide an alternative process which may improve the result of a vacuum pressure impregnation process (for insulating electrical devices).

It was now found that compositions comprising an epoxide, a binder and between 0.1 and 10 wt-% semiconductive nano-particles whereby the composition is characterized by viscosity between 10mPas (preferably 20 mPas) and 300mPas at the point of impregnation and whereby the ratio of epoxide and binder allows formation of a polymer show beneficial dielectric properties.

It was also found that nano-composite dielectric can be manufactured in an easy and reliable way by a process comprising the step of mixing nano-particles and epoxy component by means of ultrasound.

It was also found that the compositions as described herein may be used in the manufacture of electrical devices. In particular, they are also useful as Winding insulations e.g. for the insulation of high voltage rotating machines.

Further, a procedure for the dispersion of the semiconductive (e.g. zinc oxide) nano-particles employing a magnetic stirrer, an ultrasonic probe and shear force mixing was found. After this procedure the nano-particles settled neither after the mixing nor during the cure of the resin. A scanning electron microscope investigation showed the particles were dispersed as nano-particles. Without being bound by theory, it is believed that the mixing procedure is an important difference between the manufacturing process according to this invention when compared with the prior art using (high viscosity) cast resins. In the latter case it is sufficient to disperse by hand mixing.

Further, it was found that electrical tree propagation in impregnating resins can be retarded by the dispersion of semiconductive nano-particles in said resins.

Unless otherwise stated, the following definitions shall apply in this specification:
"Epoxy component" or "epoxide" refers to a monomer consisting of two or more epoxide groups, capable in forming epoxy resins by either catalytic reaction or by linking with a hardener. Typical examples of epoxy resins are bisphenol A based compounds, bisphenol F based compounds or cycloaliphatics such as bisphenol A Epoxy resins of epichlorohydrin having a molecular mass below 700 (e.g. Araldit F^{®}).
"Hardener" or "Binder" refers to a monomer consisting of two or more functional groups, capable in reacting with an epoxy component to form an epoxy resin. Typical examples of hardeners are diamines, dioles and related compounds such as phthalic acid anhydride and its derivatives (e.g. Aradur MY905^{®}).
"Epoxy resin" refers to a polymer having a epoxide as starting material. A preferred epoxy resin comprises an epoxide and a hardener in a ratio to allow formation of a solid polymer. Epoxy resins may consist of a plurality of Epoxides and / or hardeners. The ratio of epoxides and hardener depends inter alia on the nature of the starting materials (in particular amount of functional groups), the desired amount of cross-linked positions and other parameters.
"Nano-particles" refers to a microscopic solid particle with at least one dimension <200nm. Preferred nano-particles are < 200nm in all dimensions. Preferred dimensions (mean particle size) are between 1 and 100 nm, particular preferably between 20 and 90 nm, for example 75 nm +/- 32 nm. The particle size may be determined by X-Ray diffraction (XRD) and/or Scanning electron microscopy (SEM). Distribution of particle size is defined by the percentage of particles within a given interval. Nano-particles are preferably selected from the group consisting of semiconductive materials, such as zinc oxide, titandioxide, silica, hexagonal boron nitride, particular preferably zinc oxide.
"Nano-composite dielectrics" refers to dielectrics comprising nano-particles. Dielectrics are preferably based on polymers, such as polyolefines or epoxy resins, preferably on epoxy resins.
"Electrical devices" refers to all kinds of electrical devices with impregnated electrical insulations. Typically, these are high voltage generators or motors. Currently, the winding insulations of these rotating machines are preferably manufactured using the vacuum pressure impregnation (VPI) process.

Viscosity refers to the dynamic viscosity η (etha), defined by the quotient of shear stress τ (tau) and the velocity gradient ν (nju), measured in Pa·s. Viscosities are determined according to ISO 12058-1. Values of viscosity relate to the compositions prior to polymerization, unless otherwise specified.

In the context of the invention as described herein, the definitions, ranges, their preferences and particular preferences may be combined at will. Further, selected definitions may not apply.

In a first aspect, the invention relates to an impregnating resin ("composition") comprising an epoxide, a binder and between 0.1 and 10 wt-% semiconductive nano-particles whereby the composition has a viscosity below 300 mPas at the point of impregnation and whereby the ratio of epoxide and binder allows formation of a polymer.

In a preferred embodiment, the invention relates to a composition, where the epoxide consists of a bisphenol A epoxy resin of epichlorohydrin having a molecular mass below 700 g/mol.

In a preferred embodiment, the invention relates to a composition, where the binder is selected from the group consisting of phthalic acid anhydride and its derivatives.

In a preferred embodiment, the invention relates to a composition, where 0.2 and 5 wt-% ZnO nano-particles are present. In a particular preferred embodiment, the invention relates to a composition, where 0.5 and 2 wt-% ZnO nano-particles are present.

In a further aspect, the invention provides a process for manufacturing a nano-composite dielectric comprising the step of mixing nano-particles and epoxy component by means of ultrasound.

The starting materials, ZnO nano-particles, epoxy component and hardener, are commercial available materials and can be purchased, e.g. from Aldrich Corp. or are available by known methods.

The manufacturing of a composition according to the invention comprises the step of mixing an epoxy component and nano-particles by means of ultrasound.

Preferably, epoxy resin and nano-particles are pre-mixed by means of stirring in a conventional manner and the resulting mixture is than treated by means of ultrasound. Such ultrasonic treatment takes place preferably for more than one hour, particular preferably for 2 to 24 hours, e.g. for 12 hours.

Preferably, the manufacture of nano-composite dielectric comprises the steps of i) pre-mixing epoxy resin and nano-particles by means of stirring in a conventional manner ii) subjecting the resulting mixture to ultrasonic treatment for a time to allow complete dispersion, iii) addition of hardener or catalyst to the stirred mixture to allow polymerization and iv) optionally stirring under reduced pressure.

In a further aspect, the invention relates to the use of nano-composite dielectrics according to the invention for impregnating electrical devices. In particular, nano-composite dielectrics according to the invention are useful for impregnation of electrical devices operating below 25 kV. In particular, nano-composite dielectrics according to the invention are useful for impregnation of electrical devices working below the Glass-temperature of the respective epoxy resin.

In a further aspect, the invention relates to electrical devices comprising compositions as described herein. In particular, the invention relates to high voltage rotating machines, comprising compositions as described herein and to winding isolations comprising compositions as described herein.

Without being bound by theory, it is believed that the following considerations apply on the mechanism of the propagation:
i)To retard the propagation of electrical trees inside micaceous insulations, the resin is filled with semiconductive nano-particles. If the tip of an electrical tree channel reaches the nano-particle, the propagation of this channel will be stopped or retarded, respectively. Thereby, the resistance of winding insulations to electrical tree propagation can be improved considerably by filling the resin with semiconductive nano-particles. This allows for an increase of the electric field strength in micaceous winding insulations or for a prolongation of potential insulation life, respectively.
ii)Prior to the electrical treeing experiments on impregnating resins with dispersed nano-particles, the retardation of electrical tree propagation had not been proven at elevated temperatures. Winding insulations for high voltage rotating machines operate at temperatures up to 155°C and 180°C, respectively. However, the conductivity of semiconductive (e.g. zinc oxide) nano-particles changes by orders of magnitude between room temperature and those elevated temperatures. It was assumed that an increasing conductivity of the semiconductive particles could change the mitigation of space charges and of the corresponding locally elevated electric fields. However, the mitigation of space charges is one of the most frequently proposed mechanisms for the retardation of the propagation of three channels. Therefore, it was assumed that semiconductive nano-particles would not retard tree propagation at elevated temperatures. This invention shows that the retardation of electrical tree propagation in impregnating resins takes place at least up to the glass transition temperature Tg.
iii)Another difficulty is related to the development status of contemporary impregnating resins. It was assumed that these resins could not be improved further after several decades of continued development. Contrary to these arguments, this invention shows that impregnating resins can be improved by dispersing semiconductive (e.g. zinc oxide) nano-particles.

The invention will now be described by way of example. These examples are meant to illustrate the invention, with no intend to a limitation.

### Example 1: Manufacturing of Nanocomposite dielectric

2.0g ZnO nano-particles (75nm; 95 % within 43-107 nm) are added to 100g Araldit F. The mixture is stirred for 20 min using a magnetic stirrer. Subsequently, the mixture is stirred for 2h using an overhead stirrer (57rpm). The obtained mixture is than treated by means of ultrasound for 12h. No sedimentation is observed. After additional stirring for 20h, 100g hardener Araldit MY 905 is added. The resulting mixture is stirred for 10min using an overhead stirrer under reduced pressure to allow degassing. The obtained nano-composite dielectric is now ready for use e.g. to impregnate electrical devices (ex.2) or to determine dielectric properties (ex.3), and is preferably used within 2 hrs after preparation.

The obtained nano-composite dielectric contains 1 wt-% of nano-particles, no precipitation of nano-particles is observed during 14 hours at 20°C.

### Example 2: Impregnation of electrical devices

In order to prove the applicability of the nano-composite for the impregnation of winding insulations, a micaceous insulation 2 mm in thickness is impregnated following the procedure described in K. Brandenberger, R. Brütsch, H. Schaumburg (ed.), Werkstoffe und Bauelemente der Elektro-technik, B. G. Teubner, 1997, p.615-642 (ISBN 3-519-06145-7).

After the vacuum impregnation, a microscopic investigation shows that the nano-composite is entirely impregnated.

### Example 3: Determination of dielectric strength

The dielectric strength is determined by the pin-plane electrode geometry as disclosed in Ding et al (see above) using the nanocomposite dielectric of ex. 1. The results are summarized in the tables below:

**Composition according to ex.1**

| Temperature | Time til disruption at 15 kV r.m.s |
|---|---|
| Room temperature | 250 - 1500 min |
| 90 °C | 120 - 550 min |
| 120 °C | 40 - 140 min |

**Comparative example: composition according to ex. 1 without nano-particles**

| Temperature | Time til disruption at 15 kV r.m.s |
|---|---|
| Room temperature | 15 - 40 min |

As can be seen from the table, the addition of nano-particles to the composition significantly increases the dielectric strength at room temperature / 15 kV rms. Further, even at higher temperatures, e.g. 90 °C and 120 °C, dielectric strength of the composition according to the invention is significantly better when compared with the comparative example.

## Claims

1. Impregnating resin comprising i) an epoxide, ii) a binder and iii) between 0,1 and 10 wt-% semiconductive nano-particles whereby the composition has a viscosity below 300 mPas at the point of impregnation and whereby the ratio of epoxide and binder allows formation of a polymer.

2. Impregnating resin according to claim 1, **characterized in that** the epoxide is a bisphenol A epoxy resin of epichlorohydrin having a molecular mass below 700 g/mol.

3. Impregnating resin according to claim 1 or 2, **characterized in that** the binder is selected from the group consisting of phthalic acid anhydride and its derivatives.

4. Impregnating resin according to any of claims 1 to 3, **characterized in that** the semiconductive material is selected from the group consisting of zinc oxide, titandioxide, silica, hexagonal boron nitride.

5. Impregnating resin according to any of claims 1 to 4, **characterized in that** the nano-particles have a mean diameter of 75 nm +/- 32 nm.

6. Process of manufacturing an impregnating resin according to any of claims 1 - 5 comprising the step of mixing epoxide and nano-particles by means of ultrasound.

7. Impregnating resin obtained by a process according to claim 6.

8. Electrical device comprising an impregnating resin according to any of claims 1 to 5, 7.

9. Use of an impregnating resin according to claims 1 to 5, 7 for impregnating electrical devices.

10. Process of manufacturing an electrical device according to claim 8 comprising the step of impregnating said device or parts of it with an impregnating resin according to any of claims 1 to 5, 7.

11. Process of manufacturing a nano-composite dielectric comprising the step of mixing epoxide and nano-particles by means of ultrasound.

12. Nano-composite dielectric obtained by a process of claim 11.
